# EUROPEAN PATENT APPLICATION

(11) **EP 1 076 300 A2**
(43) Date of publication of application: **14.02.2001**
(21) Application number: 00306868.1
(22) Date of filing: 10.08.2000
(51) Int. Cl.: G06F 17/30

(54) **Data control and processing system**

(30) Priority: 10.08.1999 GB 9918731
(71) Applicant: Acuma Solutions Ltd., Haslingden, Lancashire BB4 4PW (GB)
(72) Inventor: Armitage, David, Stockport SK4 2HG (GB); Harding, Lawrence, Stockport SK4 2HG (GB); Chamberlain, Mark, Stockport SK4 2HG (GB)
(74) Representative: Wood, Graham

(57) **Abstract**

The invention relates to a data transmission processing and control system, said system including a database in which data is entered and compiled into a series of groups of data and a means for determining which recipient or recipients, from a group of potential recipients, should receive the data. The database includes information relating to each recipient which can range from the recipients position, security clearance through to their preferred format and transmission of the data which they are to receive. Thus the system of two components, a repository of information and a refresh, format and distribution component which controls the distribution of the data in an efficient and controlled manner to the appropriate recipients. The invention is of particular use in the control of the transfer and provision of data with relation to organisations.

## Description

The invention to which this application relates is a system and apparatus for the control and processing of information both documents and data both within and outside of an organisation such as, for example within a company and outside to their customers, advisers and the like. There is also provided a system for the control of the transmission and format of the transmitted data presented to recipients of the same.

At the present time all organisations, and in particular large organisations, generate large amounts of paperwork in the form of reports which can be financial reports, market reports, product reports, personnel reports and the like and some of these reports are relied upon heavily by employees as they determine the strategy and actions of themselves and colleagues. However with the exception of perhaps a few senior employees of the organisation many of the reports produced are irrelevant to many of the employees and when sent or forwarded to them are discarded or barely looked at and the volume of data provided means that the important reports can be overlooked because of the total number of reports or data which they receive.. At the same time there is a perceived need for employees to be able to obtain data which is relevant to them, quickly and efficiently, and also to provide a method whereby outside persons or companies who may be in some way connected with the organisation, such as customers for the organisations products, can obtain information from the organisation relevant to them.

A further perceived problem is that the transmission of data such as in the form of reports is often fragmented and/or can be in such a manner that the data is delayed, and/or provided in an unusable format for the recipient so that the data cannot be accessed or referred to at the desired time.

The aim of the present invention is to provide a system and apparatus whereby data can be collated and allocated to specified recipients within an organisation, and to provide the data in a user specified format. A further aim of the invention is to provide the ability for a user to specify the data to be received and the format and time at which the data is to be transmitted.

In a first aspect of the invention there is provided a data transmission processing and control system, said system including a database in which data is entered and compiled into a series of groups of data, said database including a memory in which information for a number of potential recipients for said data is held and wherein said information is used in determining the selective transmission of the groups of data to selected recipients.

In one embodiment the data base includes further recipient information which can be in terms of their status and level with respect to other potential recipients, in terms of their relative security rating compared to the other recipients, identified groups of data which they are to receive, portions of groups of data which they are required to receive and any other relevant information. Typically this information is referred to in the processing of and transmission of the data from the database to selected recipients.

If the database is used within an organisation the potential recipients will typically include all employees plus selected external persons or bodies, and the information can include contact details for the sending of the data, information relating to their position and function within the organisation and possibly their security rating within the organisation.

In one embodiment on the occasion of a new group of data being entered onto the database a decision is made by the system as to which of the potential recipients on the database should receive the group of data or a portion of the same. The system selects recipients with reference to the information held on the database so that if, for example, the group of data is a report which relates to sales in a particular region, the system can select to send the data to those potential recipients indicated by the information in the database as being involved in the selling and marketing of products in that region, and the national sales manager.

On the basis of the selections made for recipients and instructions as to the processing of the group or portions of the group of data a schedule is created for that data set and is then processed so as to generate the appropriate data to be sent to the selected recipients in accordance with the schedule.

In one embodiment the database holds contact information for the recipient which allows the system to determine the format in which the data should be sent and the system includes a processor which can ensure that the data is sent to the selected recipient in the appropriate format. The conversion of the data into an appropriate format can be for example, converting the data into a printed form, converting the format of the data from one computer based format to another which can be accessed by the recipient and so on. This serves to ensure that when the recipient receives the report that they can access the same without undue delay. In one embodiment the system also includes information as to the type of transmission to be used for sending the data such as any of post, internal mail, fax, e-mail, transmission to mobile phone, pager, internet, intranet and so on using appropriate communication systems.

The system as herein described ensures that the recipient receives data which is relevant to them and does not receive data which is judged to be irrelevant thereby ensuring that the important data is clear.

In a further aspect of the invention there is provided a database in which data is compiled into sets or reports, said database including contact information for a number of potential recipients for said data and wherein the database includes further information relating to said potential recipients, which information is obtained from a recipient interface.

In one embodiment the recipient interface is a computer system which can be PC based and may be based on the internet and which allows the recipient to access the database, typically to a limited extent. Typically the access is sufficient to allow the user to identify information about the organisation, which may be of use to, for example a customer of the organisation, and/or to allow the recipient to identify a log of the reports and data which they are due to receive via the system and/or to define the manner in which they are to receive the reports and data to suit their specific requirements. This information is held in the database and referred to when the data is to be transmitted. In one embodiment the recipient may also opt to split reports or groups of data in a manner such that part can be transmitted in one form and another part in another form and so on.

In addition to the potential recipients being able to input limited information and selections at a relatively low security level in the system, an administrator level is provided which allows the changing of all information held in the system and the adding and deletion of potential recipients and also to amend the database to take into account changes in position within an organisation, changes of address and so on.

A specific embodiment of the invention is now described with reference to the accompanying drawings; wherein
Figure 1 illustrates the main components of the system in accordance with one embodiment of the invention;
Figure 2 illustrates an IDS console of Figure 1 in greater detail;
Figure 3 illustrates a format engine of Figure 1 in greater detail;
Figure 4 illustrates a schematic diagram of the system in one embodiment of the invention;
Figure 5 illustrates in schematic manner groups of data which can be held in the database in accordance with the invention;
Figure 6 illustrates in a schematic manner the various options for transmission of the data which may be available to the recipient and system; and
Figure 7 illustrates how data set may be split into subsets for distribution to selected recipients;

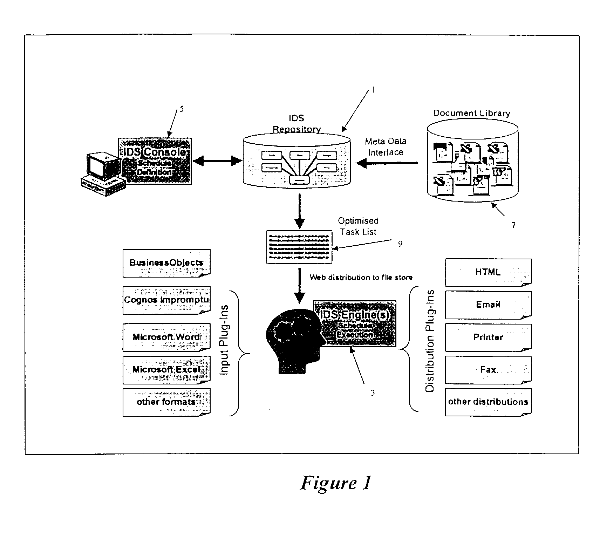

Thus in one aspect of use the system of the invention consists of two components, a repository 1 of information and a refresh format and distribution component 3 as illustrated in Figure 1.

Typically the repository component 1 is a central registry 7 of control data about the documents and the information contained therein used by an organisation, and the documents and the information contained therein to be supplied to an organisations suppliers, partners and customers.

The repository is also a central registry of control data (such as name address contact details, preferences, for how information should be sent/ received and the like) about the users within the organisation, about its suppliers partners and customers.

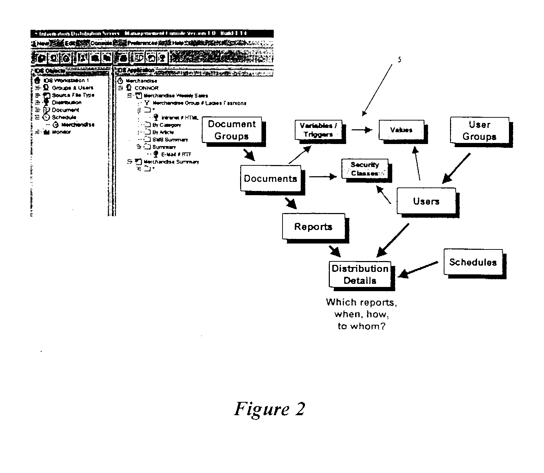

It also acts as a centralised repository of data about what information should be sent to each member of the organisation its suppliers partners or customers and also the format in which the same should be sent (e.g. Microsoft Word, Excel, HTML, PDF), the business conditions and the location to which the same should be sent and Figure 2 illustrates how the system of the invention may then process reports and documents and how the system is able to ensure that users are only sent information to which they have appropriate access privileges as determined by the administrator. The repository is managed by named administrators who administer the repository and all users registered with the repository may also subscribe to available information sources. Typically this is done by an internet site where the user can access a secure home page, view the full register of available documents and information and subscribe to receive such information.

An administrator can define named schedules and determine the time and conditions under which the schedule will be executed by the refresh format and distribution component. For certain schedules users will be able to add, remove or modify required reports, documents and information and hence control their own subscriptions to the available reports, documents and information.

The refresh, format and distribution component 3 is a mechanism for enacting the distribution of said documents and information which is based upon the control data received from the repository and from which the component constructs and executes a schedule of information and documents to be distributed. The creation of the schedule can include a schedule optimisation component 9 that ensures that the processing requirements of the schedule execution consumes as few computer resources as possible and executes he same as efficiently as possible. This component can also be used to generate statistical information that can be used to identify inefficiencies in the execution of schedules and can therefore be used to further optimise the process of information distribution.

This component can also include parallel processing techniques, distributed processing techniques and remote processing agents in order to balance the load of information distribution effectively across potentially many computers and the component can refresh the content of the reports and documents to reflect up to date data from an organisations databases. Based upon the control data from the repository the component can save the required reports and documents in the locations and formats required by the consumers of information and where appropriate the distribution agents within the component will sequence and collate the information for distribution to the users as required.

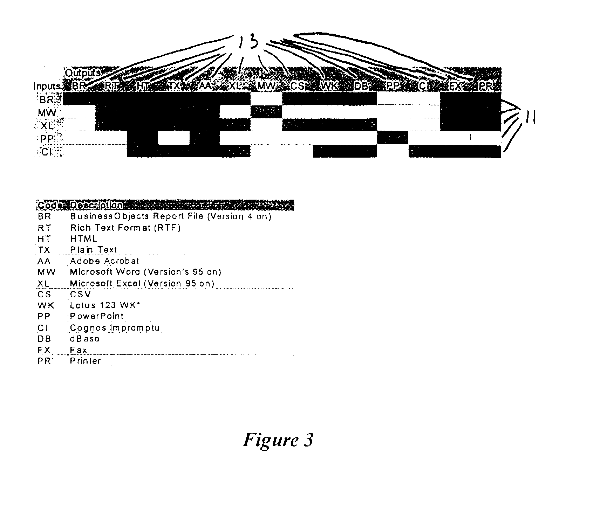

Figure 3 illustrates how the engine can be used to change the format of documents which may be received in a particular format 11, into a number of different formats 13 as required by the schedule for distribution of the documents and the format requirements for the same.

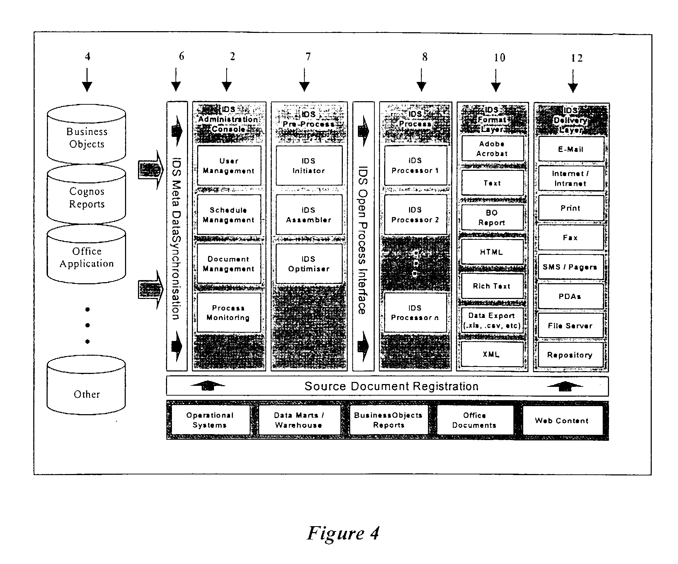

Figure 4 illustrates one implementation of the system according to the invention and shows how there is provided a database 2 which receives data from a number of sources 4, in this case within an organisation and via a staging and transformation means 6 which places the data in the required format for the database 2. Within the database 2 there is provided a storage and processing system 7 which allows the data to be grouped and then stored and allocated an identity whereby the data groups can be retrieved and processed for transmission. Thus, when a new set of data enters the database it is assessed and a schedule created for the transmission of the data on a number of criteria. For example, the details of each schedule are determined by a system administrator and/or by individual subscriptions by users. The administrator can define named Schedules and determine the time and conditions under which the Schedule will be executed by the system engine. For certain schedules the users can add, remove or otherwise modify their required reports, documents and information and hence control their own subscriptions to the reports, documents and information which could be available to them.

One stage is to identify which of a number of potential recipients are to receive the data group or a portion thereof. The potential recipients can be all of the employees of an organisation and possibly external recipients. With the potential recipients selected, these are entered into the schedule. The potential recipients can be selected with reference to their position and activities within the organisation hierarchy, the recipients security level within the organisation so that a recipient may not, for example, be able to be sent data, even though the data may be of relevance to their area of activity. With potential recipients selected, reference can then be made to each of the recipients information in the database to further tailor the schedule so that, for example, if a selected recipient is only due to receive part of a group of data or report the same can be processed 8 as is illustrated in Figure 2. Furthermore the database typically includes details of the manner in which the data is to be compiled and the data is then placed into the appropriate format 10 from a number of possible formats as illustrated. The database typically also includes a delivery layer 12 which allows the transmission of the data in required format in a desired manner from a range of options as illustrated to each of the selected recipients.

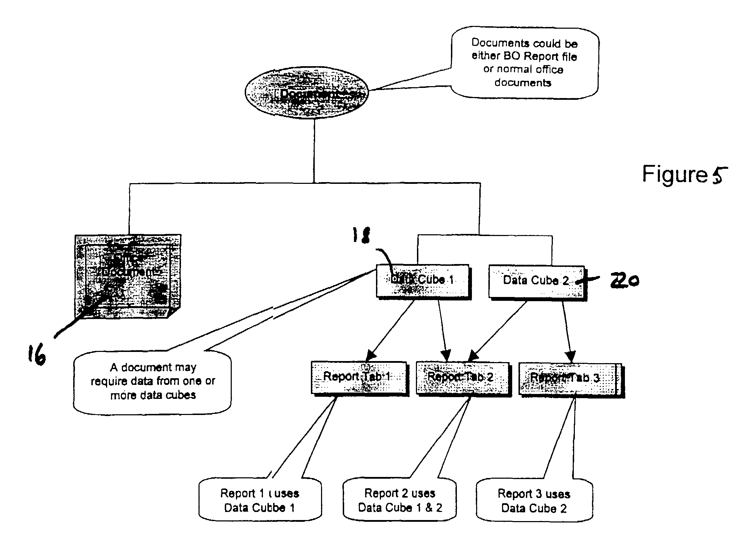

Figure 5 illustrates how the system processes reports and documents and, by doing so, can ensure that users are only sent information and documents for which they have the appropriate access privileges which are determined by the Administrator. The document 14 which can be a report or other identifiable group of data is input into the system of the invention. The document is identified by the system and, in accordance with system instructions, the document can be split into data cubes which allows the generation of portions of data which may allow parts of a report to be sent to a recipient with appropriate access privilege but not others and so on. In this embodiment, the whole document is stored as an office document 16 and is also stored in two data cubes 18,20 which allows the generation of data to be sent to recipients from the individual cubes or in combination. It should be appreciated that the system can split the original data group into as many cubes as are required to provide the correct data portions as specified in the database and in the example to allow the generation of report tabs 1,2 and 3.

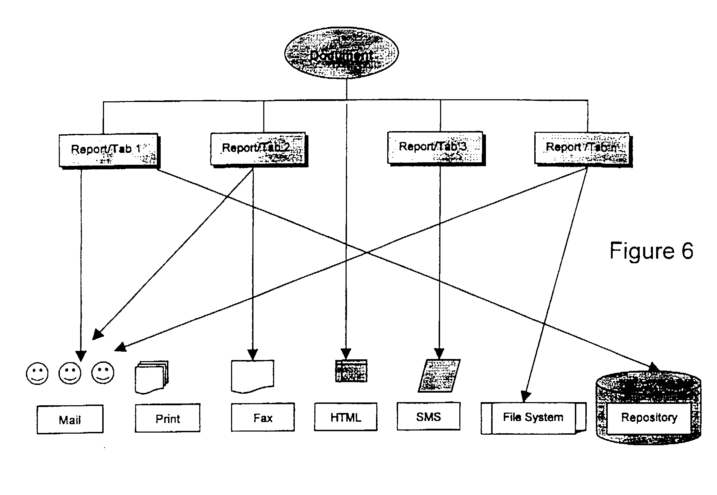

Figure 6 illustrates how the report tabs 1,2,3 from Figure 5 can then be selectively processed into a required format and then transmitted in a desired manner. For example, report tab 1 which uses data from cube 18 of Figure 2 is required to be sent in an RTF format by e-mail and is also sent to a repository as part of the system instructions for that report tab 1.

Report tab 2 which uses data from cubes 18 and 20 is required to be sent in an RTF format by e-mail and by fax.

Report tab 3 is from Cube 20 and is required to be transmitted by SMS format and the original document is stored in the database in HTML format.

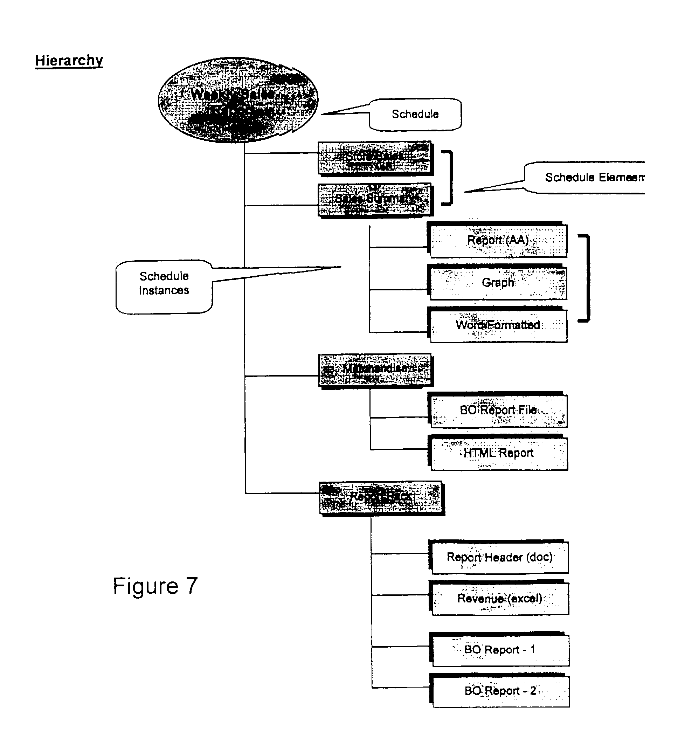

Figure 7 illustrates how, in accordance with another feature of the invention, a report pack for a selected recipient can be compiled in accordance with a schedule created in the database for that recipient. The report pack can be compiled from data from a number of data groups and ensures that the data which is sent to the recipient is all of relevance to them.

Thus it will be appreciated that the system and apparatus as set out allows for the distribution of information throughout an organisation and outside yet also provides the features of personalised content and delivery and personal subscription to the system. It also allows the auditing of the flow of information and support for structured and non-structured information. The powerful and scalable distribution engine of the system is capable of delivering the personalised information to many thousands of consumers both internal and externally of an organisation. There is also provided the feature of a centralised point at which documents are held and from which all information delivery can be controlled in accordance with specified delivery schedules. The system therefore ensures that the required recipients receive the data which is perceived to be of relevance to them abut do not receive data which is of no relevance but which conventionally would be sent to them as a recipient of general data within an organisation.

## Claims

1. A data transmission processing and control system, said system including a database in which data is entered and compiled into a series of groups of data, said database including a memory in which information for a number of potential recipients for said data is held and characterised in that said information is used in determining the selective transmission of the groups of data to selected recipients.

2. A system according to claim 1 characterised in that the database includes recipient information which includes any or any combination of their status, their hierarchical level with respect to other potential recipients, their security rating compared to the other recipients, identified groups of data which they are to receive.

3. A system according to claim 1 characterised in that the information is referred to in the processing of and transmission of the data from the database to selected recipients.

4. A system according to claim 1 characterised in that within an organisation identified recipients include the organisation employees plus selected external persons or bodies.

5. A system according to claim 1 characterised in that the information includes recipient contact details.

6. A system according to claim 1 characterised in that upon a new group of data being entered onto the database a decision is made by the system as to which potential recipients on the database should receive the group of data with reference to the recipient information held on the database.

7. A system according to claim 6 characterised in that a schedule is created for that group of data and is processed to generate the appropriate data to be sent to the selected recipients in accordance with the schedule.

8. A system according to any of the preceding claims characterised in that the information database includes details which allows the system to determine the format in which the data should be sent for each recipient and includes a processor for converting the data into the appropriate format.

9. A system according to any of the preceding claims characterised in that the information database includes details which allows the system to determine the mode of transmission of the data for each recipient.

10. A data transmission processing and control system, said system including a database in which data is entered and compiled into a series of groups of data and the data is compiled into sets or reports, said database including contact information for a number of potential recipients for said data and wherein the database includes further information relating to said potential recipients, which information is obtained from a recipient interface.

11. A system according to claim 10 characterised in that the recipient interface is a computer system which allows the recipient to access the database to allow the recipient to identify data which they are due to receive via the system.

12. A system according to claim 10 characterised in that the recipient interface allows a recipient to define the manner in which they are to receive the data.

13. A system according to claim 10 characterised in that an administrator level of access to the system is provided which allows the changing of all information held in the system and the adding and deletion of potential recipients.
